# EUROPEAN PATENT APPLICATION

(11) **EP 4 554 328 A1**
(43) Date of publication of application: **14.05.2025**
(21) Application number: 24209591.7
(22) Date of filing: 29.10.2024
(51) Int. Cl.: H05B 6/06

(54) **CONTROL METHODS OF A CURRENT SOURCE INVERTER FOR INDUCTION COOKING**

(30) Priority: 07.11.2023 US 202318503491
(71) Applicant: Whirlpool Corporation, Benton Harbor, MI 49022 (US)
(72) Inventor: GALLIVANONI, Andrea, Benton Harbor, 49022 (US); BARBATI, Mario, Benton Harbor, 49022 (US); BALDO, Salvatore, Benton Harbor, 49022 (US)
(74) Representative: PGA S.p.A., Milano, Succursale di Lugano

(57) **Abstract**

Systems and methods for controlling a current source converter (CSC) (100) comprising one or more inverters (110) with a series or parallel resonant load topology are provided. Pulse width modulation (PWM) signals are generated for driving switching devices of one or more inverters (110) of the current source converter. Power delivered to an item of cookware (112) is controlled by varying one or more of frequency, duty cycle, and overlap of the PWM signals.

## Description

### FIELD OF DISCLOSURE

Aspects of the disclosure relate to control methods of a current source inverter for induction cooking.

### DESCRIPTION OF RELATED ART

One of the main aspects of induction cooktops is the type of power converter used and the methods to control it. There are different types of converters that can be used, but it is possible to distinguish two families: the voltage source converter (VSC) and the current source converter (CSC).

### SUMMARY

A VSC is typically formed by an electromagnetic interference (EMI) filter, a bridge rectifier, one or more direct current (DC) bus capacitors and an inverter that convert power from a DC bus to the cookware though an appropriate coil. One of these types of inverters is the quasi resonant (QR) inverter. Such a design is attractive because it uses use just one switching device (such as an insulated gate bipolar transistor (IGBT) / metal-oxide-semiconductor field-effect transistor (MOSFET), Silicon-carbide (SiC) switching device, gallium nitride (GaN) switching device, etc.) and only one capacitor connected to the load to generate a variable power to the cookware.

When properly designed and matched with a load, these converters are known to operate in the so called soft-switching mode, which consists in having the switching device commutating when either the voltage across it and/or the current flowing through it are substantially null. The drawback of this kind of converters lies in the very narrow range of output power being achievable in the soft-switching mode. In particular, when the output power being regulated falls below a given limit, the inverter fails to maintain operation in soft switching mode, leading to a dramatic and unmanageable increase in EMI and thermal losses due to hard switching. These limitations lead to a relatively narrow regulation range.

For example, if the user wants to supply low power to an item of cookware but the minimum power to have soft switching is greater than the level requested by the user, the system must operate in the so-called ON / OFF mode. During the OFF phase, in which there is no power delivery, the DC BUS capacitors are charged at the peak of rectified mains line voltage. When the system gets to the ON phase, two undesirable things may occur: (i) an acoustic noise from the pan is produced (sometimes referred to as a TIK noise); and (ii) the active device (IGBT/MOSFET) switches with a very high voltage between collector and emitter (the DC BUS voltage), producing a large amount of dissipated power. This type of switching is referred to as high hard switching. Moreover, high EMI is present during this hard switching phase, which needs to be filtered in order to comply with regulations.

Another situation where a TIK noise occurs is during pan detection. Pan detection refers to a procedure performed by the converter to correctly detect the presence or absence of cookware. One way to perform the pan detection is to stimulate the system with short PWM pulses and record the system response. If the DC BUS capacitor is charged, the noise is heard every time the pan detection pulse is performed. Similar issues are present in other types of VSC, for example half-bridge converters, which also have the additional drawback of higher cost compared to the quasi-resonant converter due to an increased component count.

To avoid these issues, aspects of the disclosure describe an improved CSC converter with series or parallel resonant load topology. In such a design, the DC BUS capacitor is not present. By avoiding the DCBUS capacitor, the TiK noise and the high dissipation during the turn ON are avoided. Moreover, the specification of the EMI filter can be relaxed, eliminating the differential-mode part, obtaining a cost saving per converter.

Aspects of the disclosure further describe alternative control methods for these CSC converters, with the possibility of varying the frequency, the duty cycle and the overlap of the PWM signals of the switching devices to vary the power delivered to the cookware.

In one or more illustrative examples, a method for controlling a CSC with a series-parallel resonant load topology is provided. Pulse width modulation (PWM) signals are generated for driving switching devices of one or more inverters of the current source converter. Power delivered to an item of cookware is controlled by varying one or more of frequency, duty cycle, and overlap of the PWM signals.

In one or more illustrative examples, the method includes receiving an input indicating a desired power level for powering the item of cookware; and varying one or more of the frequency, duty cycle, and overlap of the PWM signals to provide the desired power level to the item of cookware.

In one or more illustrative examples, the controlling includes to maintain the frequency of the PWM signals at a fixed frequency; and vary the delivered power by adjusting the overlap and/or the duty cycle of the PWM signals.

In one or more illustrative examples, the method further includes further comprising varying the overlap of the PWM signals within a range of about 2 % to about 18 % and the duty cycle of the PWM signals within a range of about 30% to about 50%.

In one or more illustrative examples, the ranges of duty cycle and overlap of the PWM signals are based on factors including switching speed of the switching devices, range of frequency being used, and/or maximum power to be delivered.

In one or more illustrative examples, for a single inverter turned on the fixed frequency is the resonant frequency, and for a plurality of inverters turned on the fixed frequency is the intermediate frequency of the resonant frequencies of each of the inverters.

In one or more illustrative examples, the one or more inverters includes a first inverter and a second inverter, the cookware includes a first item and a second item of cookware, and further comprising driving the first item of cookware at a first power level using the first inverter operating at a first duty cycle and overlap at a fixed frequency; and driving the second item of cookware at a second power level using the second inverter at a second duty cycle and overlap at the same fixed frequency, wherein the first power level and the second power level are different power levels.

In one or more illustrative examples, the first inverter comprises first and second legs, and the second inverter comprises third and fourth legs separate from and operating independently of the first and second legs.

In one or more illustrative examples, the first inverter comprises a first leg that acts as a master and one of a plurality of second legs, each second leg corresponding to one of the plurality of resonant loads, and the second inverter comprises the first leg and another of the plurality of second legs.

In one or more illustrative examples, the fixed frequency is the intermediate frequency between the two resonant frequencies of the first item of cookware and the second item of cookware.

In one or more illustrative examples, a current source converter with a series or parallel resonant load topology includes a bridge rectifier configured to convert a low frequency input voltage into a full-wave rectified sinusoidal voltage; one or more inductors, configured to receive the full-wave rectified sinusoidal voltage to reduce high frequency ripple; one or more inverters, configured to supply high frequency alternating current (AC) to an item of cookware as an inductive load, and one or more controllers configured to: generate PWM signals for driving switching devices of the one or more inverters of the current source converter; and control power delivered to the item of cookware by varying one or more of frequency, duty cycle, and overlap of the PWM signals.

In one or more illustrative examples, the one or more controllers are configured to receive an input indicating a desired power level for powering the item of cookware; and vary one or more of the frequency, duty cycle, and overlap of the PWM signals to provide the desired power level to the item of cookware.

In one or more illustrative examples, the current source converter further includes a plurality of inverters each formed by a first leg and a second leg, with a resonant load connected on one side to the first leg and on the other side of the second legs, wherein each of the first and second legs is formed by a diode and a switching device in series.

In one or more illustrative examples, the one or more inverters include: a first leg that acts as master; a plurality of resonant loads; and a plurality of second legs, each second leg corresponding to one of the plurality of resonant loads, wherein each of the first and second legs is formed by a diode and a switching device in series, and each of the plurality of resonant loads is connected on one side to the first leg and on the other side to a respective one of the second legs.

In one or more illustrative examples, the cookware includes a first item and a second item of cookware, and the one or more controllers are further configured to: drive the first item of cookware at a first power level using the first leg and one of the plurality of second legs operating at a first duty cycle and overlap at a fixed frequency; and drive the second item of cookware at a second power level using the first leg and another of the plurality of second legs at a second duty cycle and overlap at the same fixed frequency, wherein the first power level and the second power level are different power levels, and fixed frequency is the intermediate frequency between the resonant frequencies of the first item of cookware and the second item of cookware.

In one or more illustrative examples, the one or more controllers are further configured to maintain the frequency of the PWM signals at a fixed frequency; and vary the delivered power by adjusting the overlap and/or the duty cycle of the PWM signals.

In one or more illustrative examples, for a single inverter turned on the fixed frequency is the resonant frequency, and for a plurality of inverters turned on the fixed frequency is the intermediate frequency of the resonant frequencies of each of the inverters.

In one or more illustrative examples, wherein the one or more controllers are further configured to vary the overlap of the PWM signals within a range of about 2 % to about 18 % and the duty cycle of the PWM signals within a range of about 30% to about 50%.

In one or more illustrative examples, the ranges of duty cycle and overlap of the PWM signals are based on factors including switching speed of the switching devices, range of frequency being used, and/or maximum power to be delivered.

In one or more illustrative examples, the one or more controllers are configured to set the frequency, duty cycle, and overlap of the PWM signals to provide the desired power level based on an information mapping stored to the one or more controllers.

### BRIEF DESCRIPTION OF THE DRAWINGS

FIG. 1 illustrates an example CSC converter, in accordance with an embodiment of the disclosure;
FIG. 2 illustrates an example of PWM signals to drive the switching devices of the CSC converter in FIG. 1, with a fixed overlap between the signals at minimum setting, discussed in details herein;
FIG. 3 illustrates example waveforms of the operation of the CSC in FIG. 1 at a resonant frequency, with a fixed duty cycle and a fixed overlap at a minimum setting;
FIG. 4 illustrates example waveforms of the operation of the CSC in FIG. 1 at a frequency lower than the resonance frequency, with a fixed duty cycle at 50 % and a fixed overlap at a minimum setting;
FIG. 5 illustrates example waveforms of the operation of the CSC in FIG. 1 at a frequency higher than the resonance frequency, with a fixed duty cycle at 50 % and a fixed overlap at a minimum setting;
FIG. 6 illustrates example waveforms of the operation of the CSC in FIG. 1 with in particular power supplied to a power coil feeding the cookware, average power dissipated on the switches and diodes, and V_{ce} voltage of the power switches as a function of frequency;
FIG. 7 illustrates example waveforms of the operation of the CSC in FIG. 1 at the resonant frequency, with a fixed duty cycle at 50 %, and 10 % of overlap between the PWM signals of Q₁ and Q₂;
FIG. 8 illustrates an example of the relationship between PWM overlap and the power delivered to the cookware and the relationship between PWM overlap and the V_{ce} voltage of the power switching devices at three fixed working frequencies: below, at, and above the resonant frequency;
FIG. 9 illustrates an example of the trend of the power delivered to the cookware as a function of the frequency and the percentage of overlap between the two PWM signals;
FIG. 10 illustrates an example of a converter with two current source inverters connected to the same mains line;
FIG. 11 illustrates a representation of PWM signals at different duty cycles;
FIG. 12 illustrates example waveforms of the operation of the CSC in FIG. 1 at the resonant frequency, with a fixed overlap at 2 % and a fixed duty cycle of 30 % of the PWM signals of Q₁ and Q₂;
FIG. 13 illustrates an example of the duty cycle-power relationship and the duty cycle-Vce voltage relationship at three fixed working frequencies: below, at, and above the resonant frequency;
FIG. 14 illustrates an example of power delivered to the cookware vs frequency at different duty cycles of the PWM signals;
FIG. 15 illustrates an example of the power dissipated from the Q₁ and Q₂ devices at resonant frequency for overlap variation and duty cycle variation;
FIG. 16 illustrates an example of the power dissipated from the DQ₁ and DQ₂ devices at the resonant frequency for overlap variation (blue and violet curves) and duty cycle variation (light blue and red curves);
FIG. 17 illustrates an example of the relationship between the power delivered to the cookware and the frequency at different duty cycles and overlap;
FIG. 18 illustrates a current source converter with one master leg and one slave leg for each load;
FIG. 19 illustrates an example process for operation of the example CSC converters of FIGS. 1, 10, or 18.

### DETAILED DESCRIPTION

As required, detailed embodiments of the present invention are disclosed herein; however, it is to be understood that the disclosed embodiments are merely exemplary of the invention that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present invention.

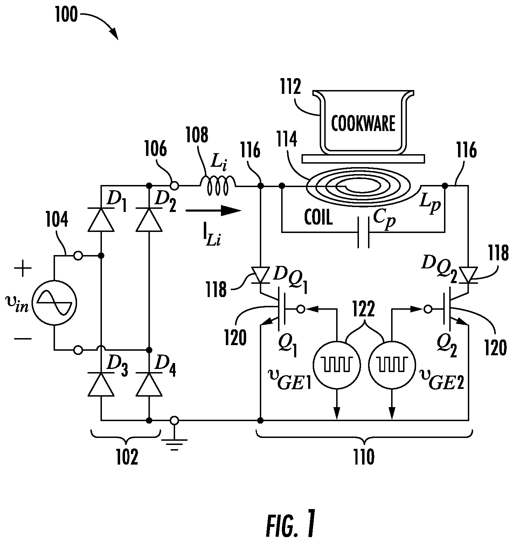

FIG. 1 illustrates an example improved CSC 100, in accordance with an embodiment of the disclosure. The CSC 100 includes a bridge rectifier 102 to convert the low frequency input voltage 104 into a full-wave rectified sinusoidal voltage 106.

As shown, the CSC 100 is designed without an EMI filter and DC BUS capacitor. Instead, a large inductor 108, shown as Lᵢ, is present, which imposes its current on the high frequency side, formed by an LC load that can be in series or parallel and two legs 116 each with an IGBT switching device 120 (Q₁ and Q₂ respectively) and diode 118 (DQ, and DQ₂ respectively) in series.

More specifically, the CSC 100 first includes the bridge rectifier 102 diodes. The diodes D₁ and D₄ of the bridge rectifier 102 operate during the positive half-cycle of the utility-line input voltage. The diodes D₂ and D₃ operate during the negative half-cycle of the utility-line input voltage. The model of the rectifier output is the full-wave rectified sinusoidal voltage source 106.

The inductor 108, Lᵢ, with a value of inductance of the order of hundreds of µH is present and connected to the full-wave rectified sinusoidal voltage source 106. The inductor 108 imposes its current on the high frequency side and reduces the high frequency ripple on the main line current.

Finally, a resonant power converter block 110, which is the main part of the system, supplies the high frequency AC to the cookware 112 through the resonant load formed by the coil 114 Lₚ, capacitor Cₚ, and the cookware 112. In the example of FIG 1, the resonant load is formed by a parallel between Lₚ and Cₚ, but could be also formed by a series between the inductor and the capacitor.

The switching converter side is formed by two legs 116 in which each leg 116 includes one diode 118 and one switching device 120. A first leg 116 is shown with switch Q₁ and diode DQ, connected across the supply a between a first side of the inductive load and Lᵢ, and a second leg 116 is shown as switch Q₂ and diode DQ₂ connected to the other side of the inductive load across the supply. The switching device 120 and the diode 118 can be separated or integrated in a unique device, usually named reverse blocking devices (for example IXYS IXRH40N120 devices).

Using this topology, the differential mode EMI filter can be eliminated, because low-ripple condition of the mains line input current can be achieved rather easily. As a result, a high input power factor (PF) and a low total harmonic distortion of the mains line input current (THDᵢ) can be obtained.

The typical control of this converter 100 consists in driving the two Q₁ and Q₂ switching devices 120 with high frequency PWM signals. These PWM signals may be referred to herein as drive voltages V_{GE}. The PWM signals may be generated by a controller 122.

For example, the high frequency PWM signals may be generated by the controller 122 with a 50 % duty and 180° of phase displacement between them. Q₁ and Q₂ may be IGBTs or MOSFETs, for example. The power on the load varies as the driving frequency varies, according to the resonant frequency of the load, as in all resonant converters.

In this type of converter, it is necessary to ensure that during the switching the currents of Q₁ and Q₂ are not simultaneously at zero. For this reason, it is necessary to maintain a minimum of overlap between the two PWM signals, so as to never have a moment in which both devices are OFF.

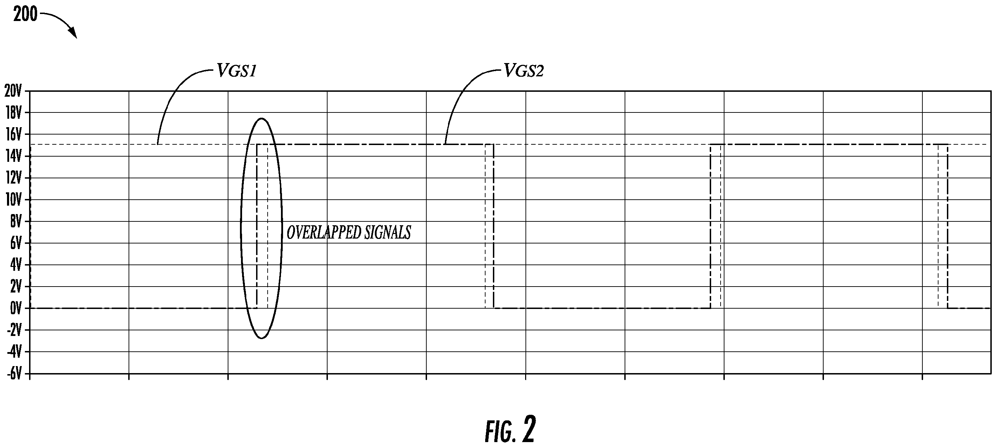

FIG. 2 illustrates an example 200 of PWM signals to drive the switching devices of FIG. 1. In this case, the overlap is 2 % of Tₒₙ duration. The minimum overlap depends on the switching speed of the devices and the range of frequencies used. The overlap is utilized to ensure that the current of Q₁ and Q₂ does not go to zero during the switching of the devices.

With continuing reference to the circuit in FIG. 1, in which the supply voltage is 230 V rms at 50 Hz, it is possible to model the resonant load as a parallel RLC, in which the coil 114 plus cookware 112 has an inductance Lₚ of 75 µH, a resistance Rₚ of 140 Ω and a fixed value of 300 nF for the capacitor Cp. With this load a resonant frequency of 33.5 kHz is obtained. The graphs illustrated herein are simulation results of the operation of the CSC. For this simulation, the input inductor Lᵢ has a value of 5 mH, guaranteeing very low ripple in the input current. Q₁ and Q₂ are IGBT devices while DQ₁ and DQ₂ are fast recovery diodes 118. As described before, in a real application it is possible to use integrated devices like IXRH40N120.

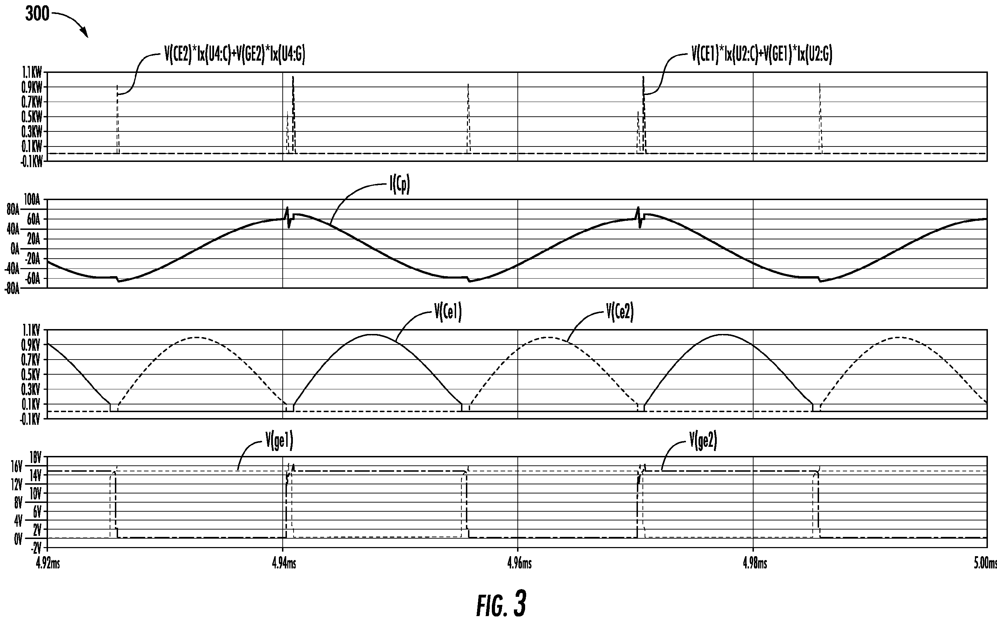

FIG. 3 illustrates an example 300 of waveforms of the operation at the resonant frequency, fixed duty cycle at 50 % and fixed overlap at minimum to guarantee the continuity of the current passing from Q₁ and Q₂ during the switching (2 % for this simulation). Starting at the bottom, the lowest graph shows the gate signals of the Q₁ and Q₂ switching devices 120. Moving upwards, the traces are the Vce voltages of Q₁ and Q₂ switching devices 120. Moving upwards again, the trace is the current of the capacitor Cₚ. As used herein, the Vce voltages refers to the voltage across the collector and the emitter of the switching devices 120 used in this implementation. Moving upwards to the top, the traces are the instantaneous power dissipations of the Q₁ and Q₂ switching devices 120. It should be noted that the specific minimum overlap may vary based on the characteristics of the switching devices 120, and in other examples a larger overlap such as 3-5% may be preferred or a smaller overlap such as 1% or even .5% may be possible.

In these conditions the power on the cookware is the minimum possible in continuous mode (around 1.8 kW) and the average power dissipation on the Q₁ and Q₂ switching devices 120 and the DQ₁ and DQ₂ diodes 118 is at minimum (around 10 W for each switching device and 7 W for each diode 118). When the converter works at resonant frequency, the V_{ce} voltage of the devices Q₁ and Q₂ are perfectly in phase with the PWM signals.

Without any changes, to have lower power it is necessary to operate in ON/OFF mode, in which the converter maintains the minimum continuous power for a fixed time duration and then it turns OFF for another fixed time, to have an average power lower than the minimum in continuous mode. During this mode of operation, due to this converter topology the annoying TIK noise may be avoided. Also, the power dissipation and EMI due to the discharge of the DC BUS capacitor is avoided because the DC BUS capacitor is not present.

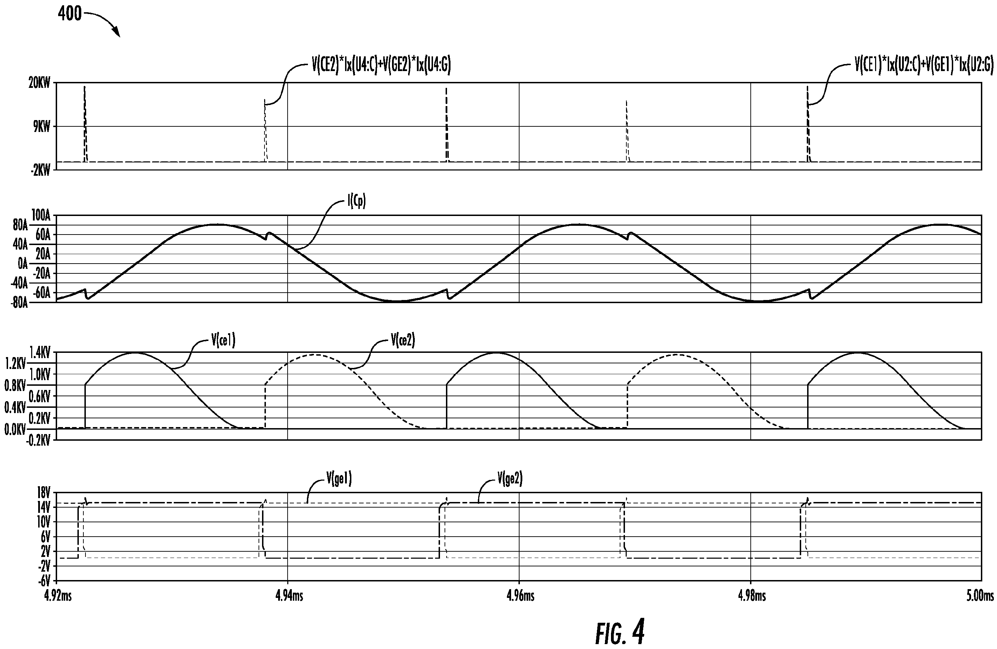

FIG. 4 illustrates an example 400 of the operation at a frequency lower than the resonance one, in particular at 31 kHz, fixed duty cycle at 50 % and fixed overlap at minimum (2 %). Starting at the bottom, the lowest graph shows the gate signals of Q₁ and Q₂ respectively, the next graph up shows the Vce voltages of Q₁ and Q₂ respectively, next, the current of the capacitor Cp is shown, and finally the instantaneous power dissipations of Q₁ and Q₂ are shown. As can be seen, the V_{ce} voltage of the devices Q₁ and Q₂ are leading the PWM signals.

In this condition, the power on the load is maximum (around 4 kW in this example) and it is limited by the maximum voltage that the switching devices 120 and diodes 118 can withstand. In this case, Q₁ and Q₂ must be chosen to support 1400 V. V_{ce} voltage of the devices Q₁ and Q₂ are leading the PWM signals.

As can be seen from FIG. 4, the dissipation due to switching occurs when the Q₁ and Q₂ switching devices 120 are switched OFF. This effect is especially present for IGBT switching devices 120 that have slow turn-OFF. Compared to a quasi-resonant VSC converter, in this CSC 100 converter the switching devices 120 are switched OFF at very high V_{ce} voltage (800 V in this example). Because of this, the power dissipated due to hard switching is less than in a quasi-resonant VSC converter because the DC BUS capacitor, responsible for the large amount of power dissipated, is not present. The peaks of instantaneous dissipation in this case are around 20 kW with a duration around 100 ns, which are acceptable values for such an application. The average power dissipated for each IGBT is around 40 W.

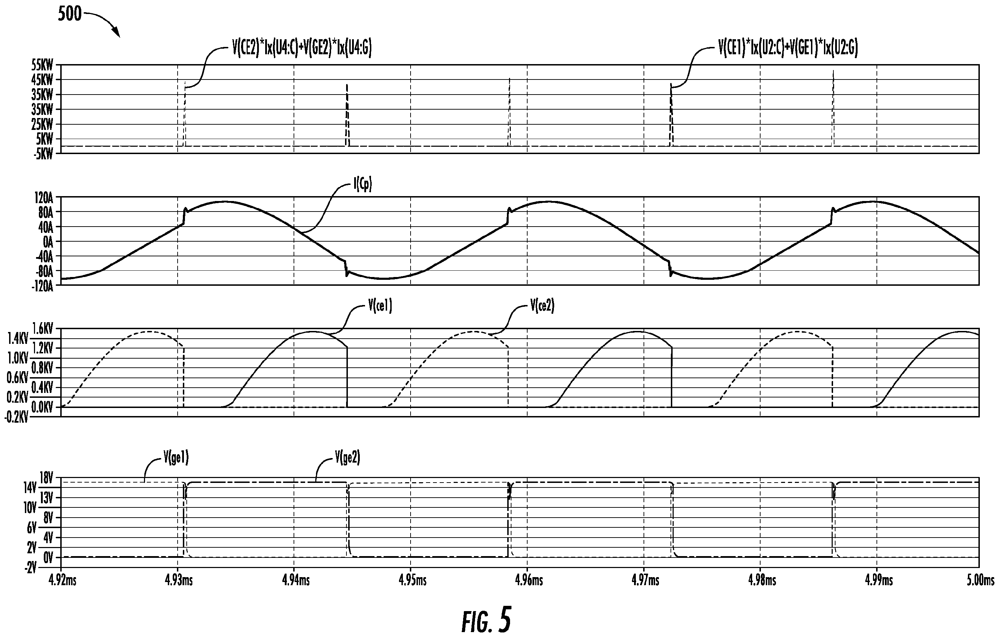

FIG. 5 illustrates an example 500 of the operation at a frequency higher than the resonance one, in particular 36 kHz, fixed duty cycle at 50 % and fixed overlap at minimum (2 %). Starting at the bottom, the lowest graph shows the gate signals of the Q₁ and Q₂ switching devices 120, next the Vce voltages of Q₁ and Q₂ switching devices 120, next, the current of the capacitor Cp, and at the top the instantaneous power dissipations of Q₁ and Q₂ respectively. V_{ce} voltage of the devices Q₁ and Q₂ lags behind the PWM signals.

Even in this condition, the power on the load is maximum (around 4KW) but the power dissipation on the devices is higher than the case at 31 kHz. In particular, in this case the dissipation occurs when the IGBTs are turned ON and is larger than the dissipation when the devices are turned OFF, having a worse system efficiency.

From the top graph of FIG. 5 it is possible to see peaks of dissipation around 45 kW, more than double of the previous case. The average power dissipated for each IGBT is around 90 W. Moreover, in this case Q₁ and Q₂ must be chosen to support more than 1500 V, a value too high for electronic devices usually used in the induction field. The V_{ce} voltage of the devices Q₁ and Q₂ lags behind the PWM signals.

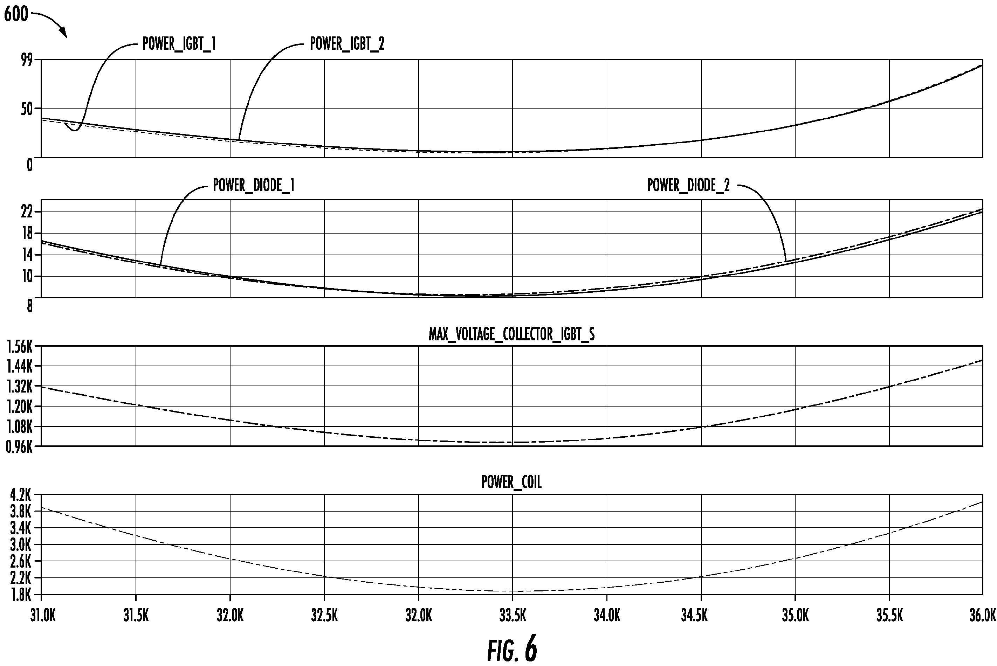

FIG. 6 illustrates an example 600 of the trend of the power supplied to the cookware 112 (referred to as Power_Coil), average power dissipated on the IGBT switching devices 120 and diodes 118 and V_{ce} voltage as a function of the frequency. Power supplied to the cookware 112 is shown as Power_Coil in the bottom graph. Power dissipated on the IGBTs and diodes 118 is shown in the upper two graphs. The V_{ce} voltage (third graph down) is shown as a function of the frequency.

From this description it may be concluded that it is possible to control the power delivered on the pot by acting on the frequency alone. For example, it may be considered that the power on the cookware is varied by acting on the driving frequency of the Q₁ and Q₂ switching devices 120. However, as happens for VSC converters, varying only the frequency allows for a very limited power regulation range. Such a range may be too limited to be able to obtain, for example, low power in a continuous mode.

It may be advisable to work at the resonant frequency to have the minimum power in continuous mode and to decrease the frequency to have higher power. Increasing the frequency with respect to the resonance would lead to having higher power but with larger dissipation on the devices and very high Vce voltage to be withstood by the devices.

Also, in the case of a system with two inverters and therefore two coils 114 and two items of cookware 112, to avoid whistles due to frequency beats, it is necessary to work in isofrequency. Unfortunately, it often happens that to have two different power levels on the two items of cookware 112 it is necessary to drive with two different frequencies, with inevitable system whistles.

Thus, the disclosure proposes two different methods of driving the inverter. In particular, at fixed frequency, it is possible to vary the power delivered to the cookware by changing the duty cycle and/or the overlap between the PWM driving signals.

Beginning with overlap changing, consider the same circuit with the same values of the electronic components in FIG. 1. In this configuration it is possible to deliver about 1.8 kW at the resonant frequency of 33.5 kHz up to about 4 kW by lowering the frequency to 31 kHz. Suppose to keep the working frequency fixed at the resonance frequency (33.5 kHz in this case) and the duty cycle fixed at 50 %. Increasing the percentage of overlap between the two PWM driving signals of Q₁ and Q₂, i.e. the time in which the two Q₁ and Q₂ switching devices 120 are turned on at the same time, it is possible to see an increase of the power delivered to the cookware proportional to the percentage of the overlap.

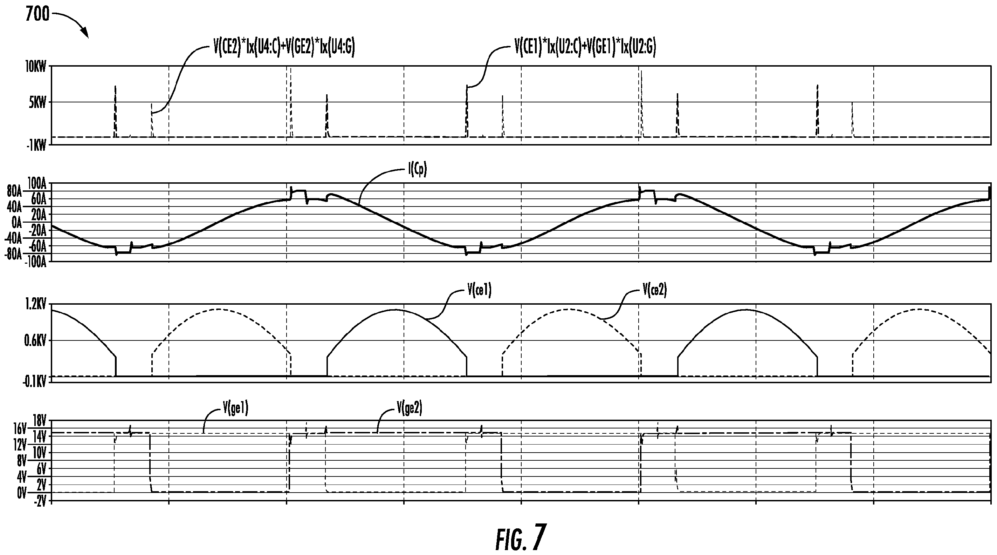

FIG. 7 illustrates an example 700 of the waveforms of the operation at the resonant frequency, with a fixed duty cycle of 50 %, and a 10 % overlap between the PWM signals of Q₁ and Q₂. Starting from the bottom trace, the gate signals of Q₁ and Q₂ switching devices 120 are shown, followed by the V_{ce} voltages of Q₁ and Q₂ switching devices 120, then the current of the capacitor Cₚ, finally at the top the instantaneous power dissipations of Q₁ and Q₂ switching devices 120. The V_{CE} voltage of the devices Q₁ and Q₂ switching devices 120 are in phase with PWM signals and the switching dissipation occurs during both turn ON and turn OFF for each device.

In these conditions the power on the cookware is around 2.5 kW and the average power dissipation on the Q₁ and Q₂ switching device 120 and the DQ₁ and DQ₂ diodes 118 is around 25 W for each Q and 10 W for each diode 118. When the converter works at resonant frequency, the V_{CE} voltage of the devices Q₁ and Q₂ are perfectly in phase with the PWM signals, but it is possible to see that the dissipation occurs when the Qs are turned ON and turned OFF, and its amount is similar on the two commutations.

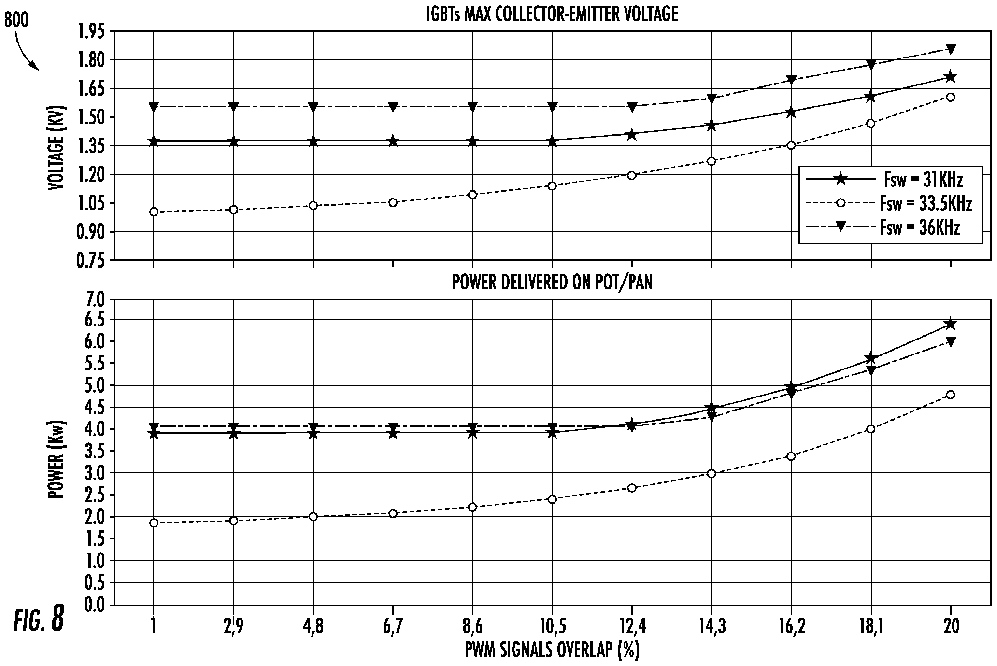

FIG. 8 illustrates an example 800 of the overlap-power relationship and the overlap-Vcε voltage relationship at three fixed working frequencies, 31 kHz, 33.5 kHz (resonant frequency) and 36 kHz. As can be seen, keeping the driving frequency fixed at resonance one, it is possible to vary the delivered power from a minimum of 1.8 kW at 1 % ÷ 2 % of overlap up to about 4 kW at about 18 % overlap (circle line). Higher overlap values are not recommended because the V_{CE} voltage increases up to the maximum supported by the devices. The star and triangle curves instead represent the power with respect to the overlap at highest (36 kHz) and lowest (31 kHz) frequency. As can be seen, varying the percentage of overlap with a frequency different from the resonance does not cause variations up to about 12 % overlap. After 12 % of overlap, the power and V_{CE} voltage become too high for the typical application of induction, in which usually 4 kW of power delivered and 1400 V of V_{CE} are not exceeded on a single coil 114.

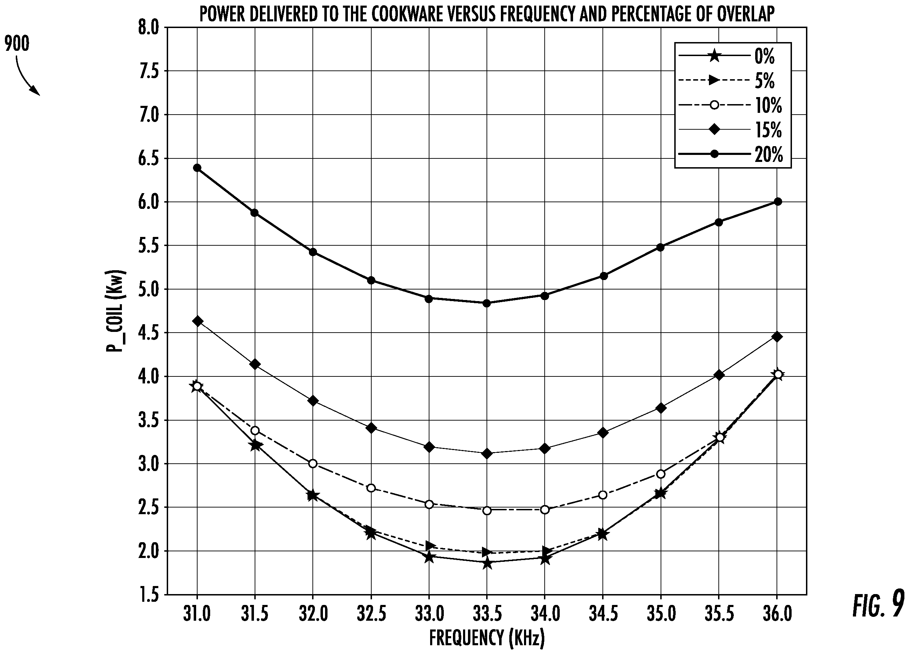

FIG. 9 illustrates an example 900 of the trend of the power delivered to the cookware 112 as a function of the frequency and the percentage of overlap between the two PWM signals. It is possible to notice how the effect of variation due to the overlap is more marked when the system is working at the resonant frequency (e.g., here as 33.5 kHz).

These numbers suggest that it is advisable to work at resonance frequency changing the % of overlap from 2 % to a maximum of 18 %, so as to guarantee a reasonable range of powers and voltages for typical induction applications, instead of changing the operating frequency from 33.5 kHz to 31 kHz in order to control the delivered power. It is clear that these numbers are indicative and depend on the circuit parameters. Other configurations with different resonant load values could lead to obtaining a wider or narrower regulation range than the one shown.

With the method as described, it is possible to drive two items of cookware 112 with different power delivered while maintaining the isofrequency condition.

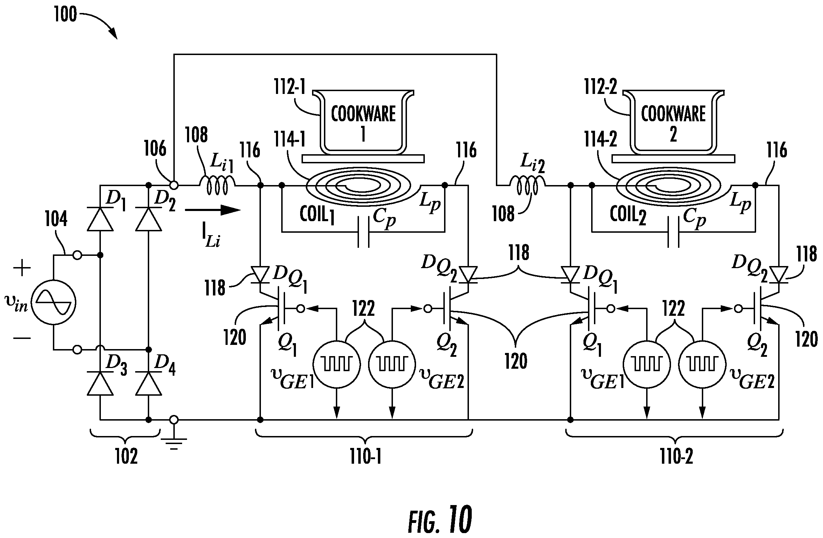

FIG. 10 illustrates an example of a converter 100 with two current source inverters connected to the same rectifier at 106. To avoid a beat sound, it is necessary that both inverters 110-1 and 110-2 operate at the same frequency. When considering such a system as in FIG. 10, there are two current source inverters 110-1,110-2 of the design as shown by the single current source inverter 110 in FIG. 1, one for each coil 114-1, 114-2 and therefore one for each item of cookware 112-2, 112-2.

Assume a power request of 1.8 kW on the first item of cookware 112-1, which is placed on a first coil 114-1 connected to a first inverter 110-1, and 3.2 kW on a second item of cookware 112-2, placed on a second coil 114-2 connected to a second inverter 110-2. In this case, the two inverters 110-1, 110-2 will have two different resonant frequencies, depending on the different cookware used. Because at the resonant frequency the system works at the minimum possible power delivered in continuous mode, the two inverters 110-1, 110-2 could work at the intermediate frequency between the two resonant frequencies, setting the % of PWM overlap that guarantees 1.8 kW on the cookware 112-1 and 3.2 kW on the cookware 112-2. Varying the overlap only leads to an increase in power, if the chosen working frequency does not satisfy the power request of 1.8 kW on the cookware 112-1, because at that frequency the power would be higher, the system could work in ON/OFF mode for that cookware.

A control algorithm of the one or more controllers 122 that generate the PWM signals may be configured to find the best driving solution (e.g., a combination of frequency and overlap) based on the power required by the user.

Turning to duty cycle changing, again consider the same circuit with the same values of the electronic components in FIG. 1. Suppose the working frequency is kept fixed at the resonance frequency (33.5 kHz in this case) and the overlap between the PWM signals is fixed and set to a minimum (for example 2 %). In this condition, varying the duty cycle above or below 50 % leads to an increase of the power delivered to the cookware 112 proportional to the duty cycle variation itself.

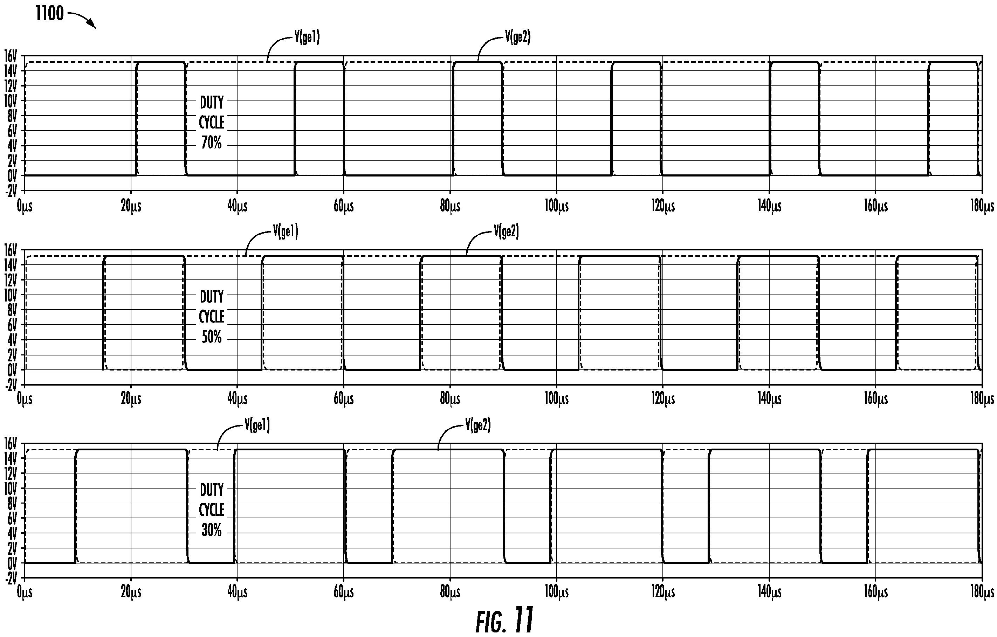

FIG. 11 illustrates an example 1100 representation of PWM signals at different duty cycles. For simplicity, the value of the duty cycle indicated herein refers to the duty cycle of the Q₁ device, but the same reasoning can be applied to device Q₂. Reducing the duty cycle from 50% to lower values, for example 40 % or 30 % means to reduce the time Tₒₙ of Q₁ and proportionally to increase the time Tₒₙ of Q₂. Vice-versa, increasing the duty cycle from 50 % to higher values, for example 60 % or 70 % means to increase the time Tₒₙ of Q₁ and proportionally to reduce the time Tₒₙ of Q₂.

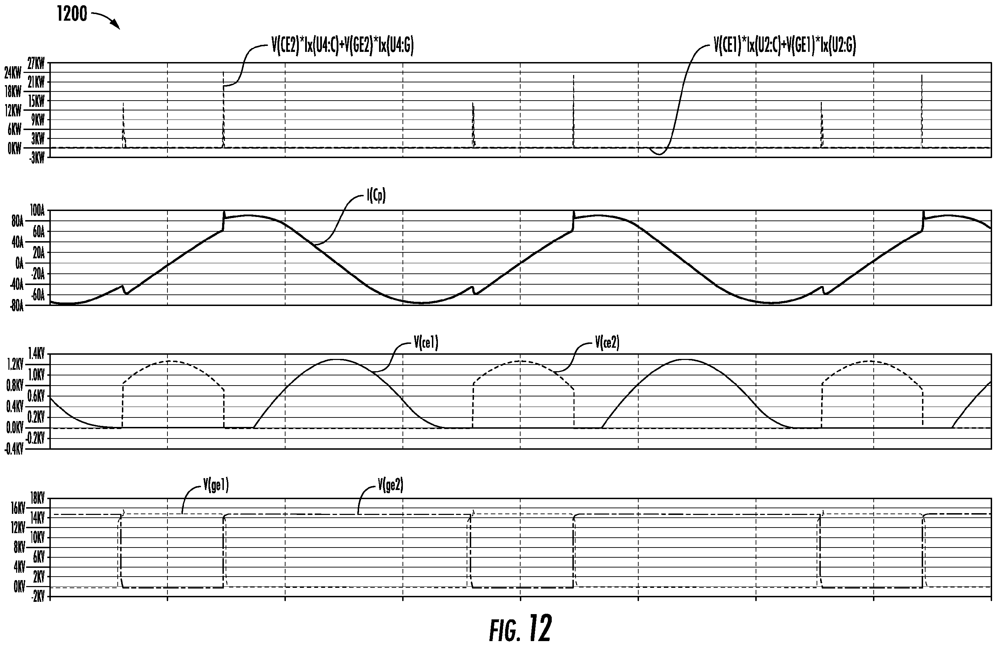

FIG. 12 illustrates an example 1200 of the waveforms of the operation at the resonant frequency, with a fixed overlap of 2 % and a duty cycle of 30 % of the PWM signal of Q₁ switching device 120 as described before. In these conditions the power on the cookware 112 is around 3 kW. The power dissipation on the Q₁ and Q₂ switching devices 120 depend on the value of duty cycle. If the duty cycle is lower than 50 %, as in the FIG. 12, Q₂ will have more dissipation than Q₁ due to switching losses. In particular, the average power dissipated is around 60 W for Q₂ and around 10 W for Q₁. If the duty cycle is greater than 50 %, Q₁ will have more dissipation than Q₂ due to switching losses. When the converter 100 works at resonant frequency, the V_{ce} voltage of the devices Q₁ and Q₂ are perfectly in phase with the PWM signals, but it is possible to see that Q₂ dissipation occurs when the IGBT is turned ON and turned OFF. There are no conditions in which one of the two switching devices 120 dissipates less than with the 50 % duty cycle.

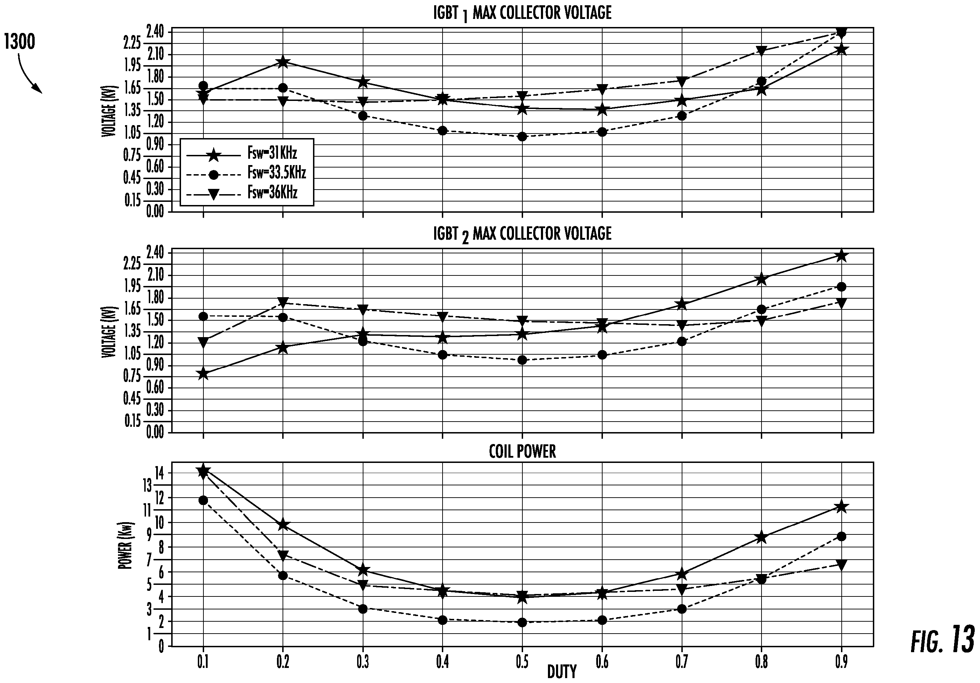

FIG. 13 illustrates an example 1300 of the duty cycle-power relationship and the duty cycle-V_{ce} voltage relationship at three fixed working frequencies, 31 kHz, 33.5 kHz (the resonant frequency in this example) and 36 kHz. As can be seen, keeping the driving frequency fixed at resonance, it is possible to vary the delivered power from a minimum of 1.8 kW at 50 % of duty cycle up to 4 kW at about 28 % of duty cycle (circles curve). Lower duty cycle values are not recommended because the V_{ce} voltage increases up to the maximum supported by the devices. The star and triangle curves instead represent the power with respect to the duty cycle at highest (36 kHz) and lowest (31 kHz) frequency.

As can be seen, increasing or decreasing the duty cycle with respect to 50 % has a different behavior. For example, referring to the circle curve (power and voltages at resonant frequencies), the power delivered to the cookware 112 is symmetrical for duty cycle values between 20 % and 80 %, but becomes much larger for duty cycle 10 % versus 90 % (12 kW versus 9 kW in this example).

However, these power values cannot be sustained by commonly used devices. In fact, the voltages V_{ce} on the devices, for very low and very high duty cycle values, increase to very high values. For example, the V_{ce} of the Q₁ switching device 120, for a duty cycle of 90 %, reaches 2400 V while the V_{ce} of device Q₂ reaches approximately 2000 V. By lowering the duty cycle, a similar behavior in V_{ce} voltages on Q₁ and Q₂ is obtained, but always with a very high maximum value which reaches approximately 1600 V for duty cycle around 20 %. These numbers suggest that it is advisable to work at duty cycle values ranging from 50 % to a minimum of 25 %, so as to guarantee a reasonable range of powers and voltages for typical induction applications.

The characteristics at 31 kHz and 36 kHz (star and triangle curves, respectively) show asymmetric behavior. Furthermore, varying the duty cycle starting from those working frequencies only leads to obtaining power values and voltages that are too high for typical applications. In fact, as also seen for the overlap, it is better to fix the frequency at the resonance and vary the duty cycle from 50 % to 25 %. It is clear that these numbers are indicative and depend on the circuit parameters. Other configurations with different resonant load values could lead to obtaining a wider or narrower regulation range than the one seen.

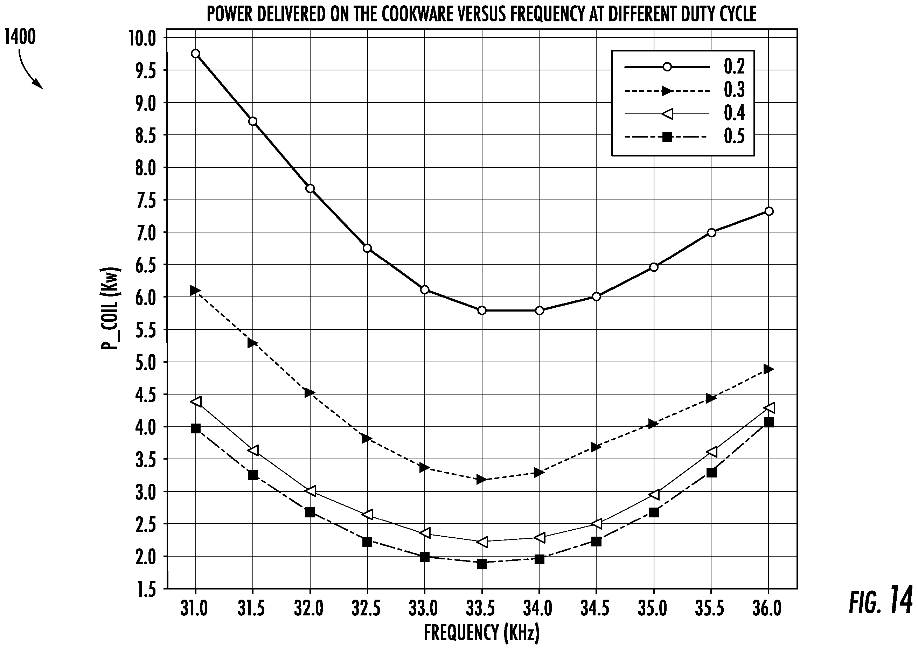

FIG. 14 illustrates an example 1400 of the trend of the power delivered to the cookware 112 as a function of the frequency and the duty cycle of the PWM signals. It is possible to notice that the effect of variation due to the duty cycle is more or less pronounced for each frequency used.

As for the previous example for the overlap changing method, also changing the duty cycle it is possible to drive two items of cookware 112-1, 112-2, such as pots, with different power delivered while maintaining the isofrequency condition. For example, again consider the system shown in FIG. 10, in which there are two current source inverters 110-1, 110-2 of the type described in FIG. 1, one for each coil 114-1, 114-2 and therefore one for each item of cookware 112-1, 112-2, e.g., pot. Suppose with a power request of 1.8 kW on cookware 112-1, placed on coil 114-1 connected to inverter 110-1, and 3.2 kW on cookware 112-2, placed on coil 114-2 connected to inverter 110-2. In this case, the two inverters 110-1, 110-2 will have two different resonant frequencies, depending on the different cookware used. Because at the resonant frequency the system works at the minimum possible power delivered in continuous mode, the two inverters 110-1, 110-2 could work at the intermediate frequency between the two resonant frequencies, setting the % of duty cycle that guarantees 1.8 kW on the cookware 112-1 and 3.2 kW on the cookware 112-2. Since varying the % of duty cycle only leads to an increase in power, if the chosen working frequency does not satisfy the power request of 1.8 kW on the cookware 112-1, because at that frequency the power would be higher, the system could work in ON/OFF mode for that cookware. As noted above, the control algorithm loaded on the controller 122 that generates the PWM signals may find the best driving solution (frequency versus duty cycle) based on the power required by the user.

To compare the overlap vs duty cycle techniques, both the overlap and the duty cycle variation of the PWM signals guarantee the control of the power delivered to the cookware 112. Both methods have advantages and disadvantages. In particular, referring to the circuit in FIG. 1, it is important to evaluate the dissipations of the Q₁ and Q₂ switching devices 120 and the DQ₁ and DQ₂ diodes 118 when the overlap method or the duty cycle method is used.

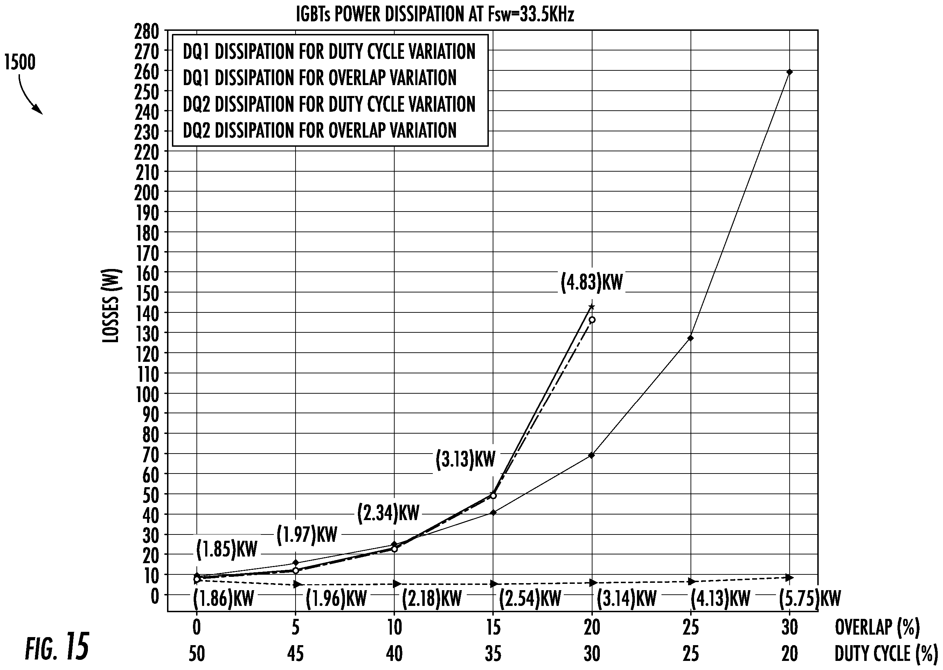

FIG. 15 illustrates an example 1500 of the power dissipated from Q₁ and Q₂ switching devices 120 at resonant frequency for overlap variation and duty cycle variation. The circle curves show the overlap variation, while the star curves show the duty cycle variation. Values in the bracket indicate the power delivered to the cookware 112 in that condition. As specified before, the % of duty cycle indicated in FIG. 15 refers to Q1 device.

As can be seen, with the overlap method the power dissipation of Q₁ and Q₂ (circle curves) is equal to each other and proportional to the percentage of overlap and the power delivered to the cookware 112 (these are the values inside the brackets as shown in FIG. 15). Instead, with the duty cycle method, the dissipation between the two devices is not symmetrical. In particular, if the duty cycle is decreased from 50 % and down (as in the FIG. 15), an increase in dissipation of the Q₂ switching device 120 (upward trending star curve) is obtained proportional to the percentage of duty cycle and the power delivered to the cookware 112, while the dissipation of the Q₁ switching device 120 remains mostly constant (lower star curve). This trend of dissipation is reversed, i.e., the Q₁ switching device 120 begins to dissipate while the Q₂ switching device 120 remains constant, if the duty cycle is increased from 50 % and up (not shown in FIG. 15).

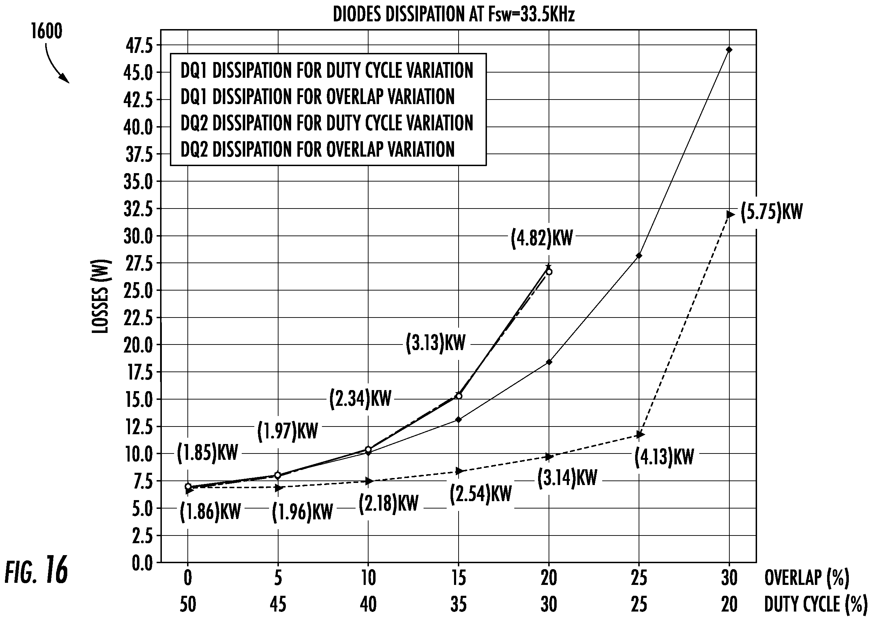

FIG. 16 shows an example 1600 of the power dissipated from DQ₁ and DQ₂ diodes 118 at resonant frequency for overlap variation (circle curves) and duty cycle variation (star curves). The values in the bracket indicate the power delivered to the cookware 112 in that condition. As before, the % of duty cycle indicated in FIG. 16 refers to Q1 device. As shown, a similar behavior to that seen for Q₁ and Q₂ devices can also be noted regarding the dissipation of the DQ₁ and DQ₂ diodes 118. In particular, with the overlap method the power dissipation of the DQ₁ and DQ₂ diodes 118 (circle curves) is equal to each other and proportional to the percentage of overlap and the power delivered to the cookware 112 (this is shown as the value inside the brackets of FIG. 16). Instead, with the duty cycle method, the dissipation between the two diodes 118 is asymmetrical. In particular, if the duty cycle is decreased from 50 % and down (as shown in FIG. 16), an increase in dissipation of the DQ₂ diode 118 is obtained proportional to the percentage of duty cycle and the power delivered to the cookware 112, while the dissipation of the DQ, diode 118 has low variation from 7 W to 11 W. This trend of dissipation is reversed, i.e., DQ₁ begins to dissipate while DQ₂ has low variation, if the duty cycle is increased from 50% and up (not shown in FIG. 16).

From the dissipation point of view, the two control methods have pros and cons. In particular, Table 1 shows the power dissipation of the devices for the same power delivered to the cookware 112 in the case of overlap and duty cycle control. As before, the % of duty cycle refers to Q1 device. As can be seen, the most efficient method is the duty cycle variation, where the total dissipation is 100 W, compared to 132 W of the overlap method. However, the duty cycle method has asymmetric dissipation. Because we refer to the decrease of % duty cycle of Q1, most of the dissipation is produced by the Q₂ and DQ₂ devices, while Q₁ and DQ₁ have very low dissipation. In case of decrease of % duty cycle of Q2, the behavior will be opposite, with most of the dissipation produced by the Q₁ and DQ, devices, while Q₂ and DQ₂ will have very low dissipation. Therefore, this method can be indicated in cases where the diodes 118 and switching devices 120 have different power sizes and/or packages. While the overlap method, although less efficient overall, guarantees balanced dissipation between the devices.

**Table 1 - Device Power Dissipation with Overlap vs Duty Cycle Control**

| Parameter | P_{cookware} (kW) | P_{diss} Q₁ (W) | P_{diss} Q₂ (W) | P_{diss} DQ₁ (W) | P_{diss} DQ₂ (W) | P_{diss} Total (W) |
|---|---|---|---|---|---|---|
| Overlap (15%) | 3.13 | 50 | 50 | 16 | 16 | 132 |
| Duty (30%) | 3.13 | 5 | 68 | 9 | 18 | 100 |

It has been shown how it is possible to use both the overlap and duty cycle methods in combination with the frequency variation (See FIGS. 9 and 14). This becomes very useful especially when two coils 114-1, 114-1 must be turned ON at the same time at different power, guaranteeing the isofrequency. However, also the overlap and duty cycle methods can be combined with each other and also combined with the frequency variation, to obtain a complete control method between frequency, overlap and duty cycle variation, depending on the needs.

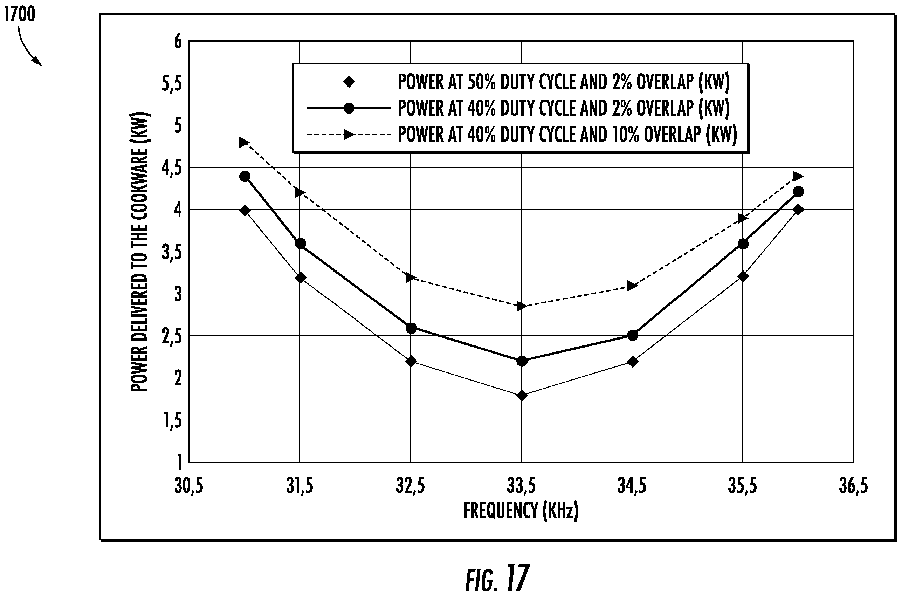

FIG. 17 shows an example 1700 of the relationship between the power delivered to the cookware 112 and the frequency at different duty cycles and overlap, in particular a curve for 50 % of duty cycle and 2 % of overlap, a curve for 40 % of duty cycle and 2 % of overlap, and a curve for 40 % of duty cycle and 10 % of overlap. It is possible to note the increase of the power due to the 8 % of overlap variation (the difference between top dotted line and middle bold solid line curves).

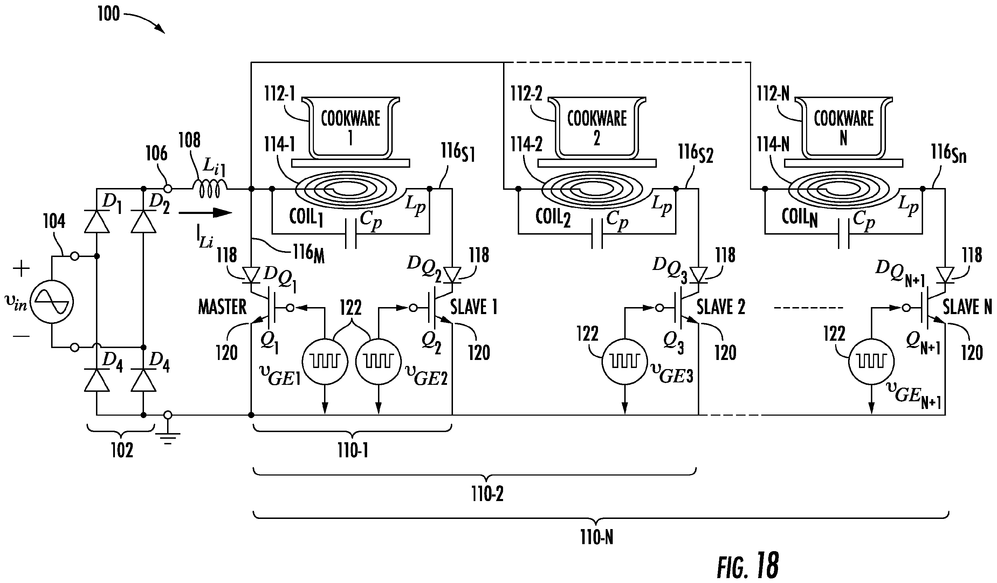

FIG. 18 illustrates a current source converter with one master leg 116M and one slave leg 116S for each of N loads (e.g., legs 116_{S1}, 116_{S2}, ... 116_{Sn}). Each leg 116 is formed by a diode 118 and a switching device 120. The CSC 100 shown in FIG. 18 may be a cost-saving variant of the CSC 100 of FIG. 10 in that instead of having two legs 116 for each load, there is only one leg 116 that acts as MASTER for all loads, plus one new leg 116 for each load, referred to herein as SLAVE. One side of all resonant loads will be connected in the master leg 116 while the other side of each load will be connected to the respective slave leg 116. As for the previous topology, each leg 116 is formed by a diode 118 and a switching device 120 (e.g., any of various power switching devices such as an IGBT, MOSFET, SIC, GAN, etc. as noted above). The switching device 120 and the diode 118 can be separated or integrated in a unique device, usually named reverse blocking devices (for example IXYS IXRH40N120 devices). It should be noted that, while three inverters 110 are shown, N is an arbitrary number and more or fewer inverters 110 may be used.

The CSCs 100 shown in FIGS. 10 and 18 each allow for independent power level selection for two different pots 112-1, 112-2. Yet, being formed by two inverters 110-1, 110-2 connected to the same bridge rectifier 102, the maximum power that can be supplied to both pots 112-1, 112-2 is limited by the maximum power available for the bridge rectifier 102 and the mains line. Usually, for induction cooking applications, the maximum power that can be supplied by a single phase from the mains line is 3700 W. This means that if both cookware are turned on, the maximum total power can never exceed that allowed by the mains line and the bridge rectifier 102.

With the topology as shown in FIG. 18, to drive two pots 112, three legs 116 are sufficient instead of four as in the topology shown in FIG. 10. In particular, there will be a common leg 116M, referred to herein as Master, a leg 116_{S1} shown as slave 1 in which the load 114-1 is connected and a leg 116_{S2} shown as slave 2 in which the load 114-2 is connected. Regarding the control strategy, if there are two coils 114-1, 114-2 (and then two loads) and the second coil 114-2 is to be powered, the master and the respective slave connected to the second coil 114-2 will be activated. If also the first coil 114-1 is to be powered, the algorithm of the controller 122 may cyclically switch on the inverters 110-1, 110-2 according to a sequence which could be: MASTER-SLAVE1, MASTER-SLAVE2, MASTER-SLAVE1 and so on. All the control algorithms seen so far can be used in this topology to optimize the control strategy. To supply a lower power than that in continuous mode, even with this configuration it will always be possible to operate in ON/OFF, because there is no DC BUS capacitor and therefore there will be no noise problems and high emissions during the phases of ON/OFF.

If the user wants to supply 600 W to the pot 112-1 placed on the first coil 114-1 and the minimum power that can be delivered in continuous mode on the cookware is 1800 W, the system can operate in the ON / OFF mode in which the 1800 W are supplied turning ON the master and slave 1 inverter 110-1 for a time interval T₁ and for the remainder of the time interval T₂ the converter is kept off to obtain an average power delivery of 600 W. The time T₁ and T₂ will be always multiples of half-waves, to always guarantee the discharge of the line inductor Lᵢ.

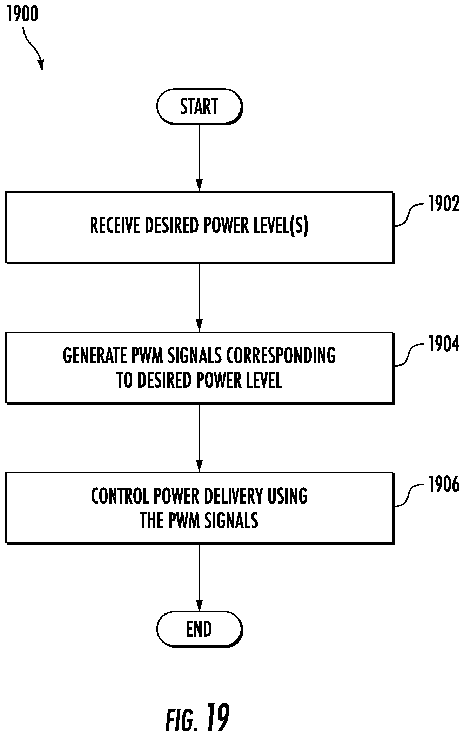

FIG. 19 illustrates an example process for the operation of current source converters discussed in detail herein. For example, the process may be used to operate the current source converters of any of FIGS. 1, 10, or 18.

At operation 1902, one or more desired power levels are received. In an example, a cooktop may receive an input indicating a desired power level for powering one or more items of cookware 112.

At operation 1904, PWM signals are generated corresponding to the desired power levels. These PWM signals may be generated by the one or more controllers 122 using the approaches discussed in detail herein. In one or more illustrative examples, the controlling includes maintaining the frequency of the PWM signals at a fixed frequency; and varying the delivered power by adjusting the overlap of the PWM signals. In one or more illustrative examples, the fixed frequency is the resonance frequency. In one or more illustrative examples, the method includes varying the overlap of the PWM signals within a range of about 2 % to about 18 %. In one or more illustrative examples, the controlling includes maintaining the frequency of the PWM signals at a fixed frequency; maintaining the overlap of the PWM signals at a minimum overlap setting; and varying the delivered power by adjusting the duty cycle of the PWM signals. In one or more illustrative examples, the controlling includes varying the duty cycle in a range between 30 % and 50 %. In one or more illustrative examples, the minimum overlap setting is 2 %. The specific values to set for a given power delivery may be based on a characterization of the specific components of the CSC 100, examples of which are given throughout the disclosure. This information mapping frequency, overlap, and/or duty cycle to desired power level may be maintained in a memory of the controller 122.

At operation 1906, power delivery is controlled to the induction elements using the PWM signals. In an example, the PWM signals may be applied to the Q₁ and Q₂ switching devices 120 of an inverter 110, such as those shown in any of FIGS. 1, 10, or 18. In one or more illustrative examples, the cookware 112 includes a first item and a second item of cookware 112, and the method further includes driving the first item of cookware 112 at a first power level using a first inverter 110 operating at a first duty cycle or overlap at a fixed frequency; and driving the second item of cookware 112 at a second power level using a second first inverter 110 at a second duty cycle or overlap at the same fixed frequency, wherein the first power level and the second power level are different power levels.

All numerical quantities in this description indicating amounts of material or conditions of reaction and/or use are to be understood as modified by the word "about" in describing the broadest scope of the technology. Practice within the numerical limits stated is generally preferred. As used herein, the term "about" means that the amount or value in question may be the specific value designated or some other value in its neighborhood. Generally, the term "about" denoting a certain value is intended to denote a range within +/- 5% of the value. In other instances, about may signify that the value or relative characteristic it modifies is within ± 0%, 0.1%, 0.5%, 1%, 2%, 3%, 4%, or 10% of the value or relative characteristic. As one example, the phrase "about 100" denotes a range of 100+/- 5, i.e., the range from 95 to 105. Generally, when the term "about" is used, it can be expected that similar results or effects can be obtained within a range of +/- 5 % of the indicated value. The term "substantially" or "generally" may be used herein to describe embodiments. The term "substantially" or "generally" may modify a value or relative characteristic. In such instances, "substantially" or "generally" may signify that the value or relative characteristic it modifies is within ± 0 %, 0.1 %, 0.5 %, 1 %, 2 %, 3 %, 4 %, 5 % or 10 % of the value or relative characteristic. It should also be appreciated that integer ranges explicitly include all intervening integers. For example, the integer range 1-10 explicitly includes 1, 2, 3, 4, 5, 6, 7, 8, 9, and 10. Similarly, the range 1 to 100 includes 1, 2, 3, 4.... 97, 98, 99, 100. Similarly, when any range is called for, intervening numbers that are increments of the difference between the upper limit and the lower limit divided by 10 can be taken as alternative upper or lower limits. For example, if the range is 1.1. to 2.1 the following numbers 1.2, 1.3, 1.4, 1.5, 1.6, 1.7, 1.8, 1.9, and 2.0 can be selected as lower or upper limits.

Computing devices such as the controller 122 generally perform computer-executable instructions which may be compiled or interpreted from computer programs created using a variety of programming languages and/or technologies, including, without limitation, and either alone or in combination, Java^{™}, C, C++, C#, Visual Basic, Python, JavaScript, Perl, etc. In general, a processor (e.g., a microprocessor) receives instructions, e.g., from a memory, a computer-readable medium, etc., and executes these instructions, thereby performing one or more processes, including one or more of the processes described herein. Such instructions and other data may be stored and transmitted using a variety of computer-readable media.

Examples 1-20 according to aspects of the invention are disclosed below.
Example 1. A method for controlling a current source converter (CSC) comprising one or more inverters with a series or parallel resonant load topology, comprising:
   generating pulse width modulation (PWM) signals for driving switching devices of one or more inverters of the current source converter; and
   controlling power delivered to an item of cookware by varying one or more of frequency, duty cycle, and overlap of the PWM signals.
Example 2. The method of Example 1, further comprising:
   receiving an input indicating a desired power level for powering the item of cookware; and
   varying one or more of the frequency, duty cycle, and overlap of the PWM signals to provide the desired power level to the item of cookware.
Example 3. The method of Example 1, wherein the controlling includes to:
   maintain the frequency of the PWM signals at a fixed frequency; and
   vary the delivered power by adjusting the overlap and/or the duty cycle of the PWM signals.
Example 4. The method of Example 3, further comprising varying the overlap of the PWM signals within a range of about 2 % to about 18 % and the duty cycle of the PWM signals within a range of about 30% to about 50%.
Example 5. The method of Example 4, wherein the ranges of duty cycle and overlap of the PWM signals are based on factors including switching speed of the switching devices, range of frequency being used, and/or maximum power to be delivered.
Example 6. The method of Example 3, wherein for a single inverter turned on the fixed frequency is the resonant frequency, and for a plurality of inverters turned on the fixed frequency is the intermediate frequency of the resonant frequencies of each of the inverters.
Example 7. The method of Example 1, wherein the one or more inverters includes a first inverter and a second inverter, the cookware includes a first item and a second item of cookware, and further comprising:
   driving the first item of cookware at a first power level using the first inverter operating at a first duty cycle and overlap at a fixed frequency; and
   driving the second item of cookware at a second power level using the second inverter at a second duty cycle and overlap at the same fixed frequency,
   wherein the first power level and the second power level are different power levels.
Example 8. The method of Example 7, wherein the first inverter comprises first and second legs, and the second inverter comprises third and fourth legs separate from and operating independently of the first and second legs.
Example 9. The method of Example 7, wherein the first inverter comprises a first leg that acts as a master and one of a plurality of second legs, each second leg corresponding to one of the plurality of resonant loads, and the second inverter comprises the first leg and another of the plurality of second legs.
Example 10. The method of Example 7, wherein the fixed frequency is the intermediate frequency between the two resonant frequencies of the first item of cookware and the second item of cookware.
Example 11. A current source converter with a series or parallel resonant load topology, comprising:
   a bridge rectifier configured to convert a low frequency input voltage into a full-wave rectified sinusoidal voltage;
   one or more inductors, configured to receive the full-wave rectified sinusoidal voltage to reduce high frequency ripple;
   one or more inverters, configured to supply high frequency alternating current (AC) to an item of cookware as an inductive load, and
   one or more controllers configured to:
      generate pulse width modulation (PWM) signals for driving switching devices of the one or more inverters of the current source converter; and
      control power delivered to the item of cookware by varying one or more of frequency, duty cycle, and overlap of the PWM signals.
Example 12. The current source converter of Example 11, wherein the one or more controllers are configured to:
   receive an input indicating a desired power level for powering the item of cookware; and
   vary one or more of the frequency, duty cycle, and overlap of the PWM signals to provide the desired power level to the item of cookware.
Example 13. The current source converter of Example 11, further comprising a plurality of inverters each formed by a first leg and a second leg, with a resonant load connected on one side to the first leg and on the other side of the second legs, wherein each of the first and second legs is formed by a diode and a switching device in series.
Example 14. The current source converter of Example 11, wherein the one or more inverters comprises:
   a first leg that acts as master;
   a plurality of resonant loads; and
   a plurality of second legs, each second leg corresponding to one of the plurality of resonant loads, wherein each of the first and second legs is formed by a diode and a switching device in series, and each of the plurality of resonant loads is connected on one side to the first leg and on the other side to a respective one of the second legs. Example 15. The current source converter of one of Examples 13 or 14, wherein the cookware includes a first item and a second item of cookware, and the one or more controllers are further configured to:
   drive the first item of cookware at a first power level using the first leg and one of the plurality of second legs operating at a first duty cycle and overlap at a fixed frequency; and
   drive the second item of cookware at a second power level using the first leg and another of the plurality of second legs at a second duty cycle and overlap at the same fixed frequency,
   wherein the first power level and the second power level are different power levels, and fixed frequency is the intermediate frequency between the resonant frequencies of the first item of cookware and the second item of cookware.
Example 16. The current source converter of one of Examples 13 or 14, wherein the one or more controllers are further configured to:
   maintain the frequency of the PWM signals at a fixed frequency; and
   vary the delivered power by adjusting the overlap and/or the duty cycle of the PWM signals.
Example 17. The current source converter of one of Examples 13 or 14, wherein for a single inverter turned on the fixed frequency is the resonant frequency, and for a plurality of inverters turned on the fixed frequency is the intermediate frequency of the resonant frequencies of each of the inverters.
Example 18. The current source converter of one of Examples 13 or 14, wherein the one or more controllers are further configured to vary the overlap of the PWM signals within a range of about 2 % to about 18 % and the duty cycle of the PWM signals within a range of about 30% to about 50%.
Example 19. The current source converter of Example 18, wherein the ranges of duty cycle and overlap of the PWM signals are based on factors including switching speed of the switching devices, range of frequency being used, and/or maximum power to be delivered.
Example 20. The current source converter of one of Examples 13 or 14, wherein the one or more controllers are configured to set the frequency, duty cycle, and overlap of the PWM signals to provide the desired power level based on an information mapping stored to the one or more controllers.

With regard to the processes, systems, methods, heuristics, etc. described herein, it should be understood that, although the steps of such processes, etc. have been described as occurring according to a certain ordered sequence, such processes could be practiced with the described steps performed in an order other than the order described herein. It further should be understood that certain steps could be performed simultaneously, that other steps could be added, or that certain steps described herein could be omitted. In other words, the descriptions of processes herein are provided for the purpose of illustrating certain embodiments, and should in no way be construed so as to limit the claims.

Accordingly, it is to be understood that the above description is intended to be illustrative and not restrictive. Many embodiments and applications other than the examples provided would be apparent upon reading the above description. The scope should be determined, not with reference to the above description, but should instead be determined with reference to the appended claims, along with the full scope of equivalents to which such claims are entitled. It is anticipated and intended that future developments will occur in the technologies discussed herein, and that the disclosed systems and methods will be incorporated into such future embodiments. In sum, it should be understood that the application is capable of modification and variation.

All terms used in the claims are intended to be given their broadest reasonable constructions and their ordinary meanings as understood by those knowledgeable in the technologies described herein unless an explicit indication to the contrary is made herein. In particular, use of the singular articles such as "a," "the," "said," etc. should be read to recite one or more of the indicated elements unless a claim recites an explicit limitation to the contrary.

The abstract of the disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various embodiments for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus, the following claims are hereby incorporated into the Detailed Description, with each claim standing on its own as a separately claimed subject matter.

While exemplary embodiments are described above, it is not intended that these embodiments describe all possible forms of the disclosure. Rather, the words used in the specification are words of description rather than limitation, and it is understood that various changes may be made without departing from the spirit and scope of the disclosure. Additionally, the features of various implementing embodiments may be combined to form further embodiments of the disclosure.

## Claims

1. A method (1900) for controlling a current source converter (CSC) (100) comprising one or more inverters (110) with a series or parallel resonant load topology, comprising:
generating (1904) pulse width modulation (PWM) signals for driving switching devices of one or more inverters (110) of the current source converter (100); and
controlling (1906) power delivered to an item of cookware (112) by varying one or more of frequency, duty cycle, and overlap of the PWM signals.

2. The method of claim 1, further comprising:
receiving (1902) an input indicating a desired power level for powering the item of cookware (112); and
varying one or more of the frequency, duty cycle, and overlap of the PWM signals to provide the desired power level to the item of cookware (112).

3. The method of any one of claims 1-2, wherein the controlling includes to:
maintain the frequency of the PWM signals at a fixed frequency; and
vary the delivered power by adjusting the overlap and/or the duty cycle of the PWM signals.

4. The method of claim 3, further comprising varying the overlap of the PWM signals within a range of about 2 % to about 18 % and the duty cycle of the PWM signals within a range of about 30% to about 50%.

5. The method of any one of claims 3-4, wherein the ranges of duty cycle and overlap of the PWM signals are based on factors including switching speed of the switching devices, range of frequency being used, and/or maximum power to be delivered.

6. The method of any one of claim 3-5, wherein for a single inverter (110) turned on the fixed frequency is the resonant frequency, and for a plurality of inverters (110) turned on the fixed frequency is the intermediate frequency of the resonant frequencies of each of the inverters (110).

7. The method of any one of claims 1-6, wherein the one or more inverters (110) includes a first inverter (110-1) and a second inverter (110-2), the cookware (112) includes a first item and a second item of cookware (112-1, 112-2), and further comprising:
driving the first item of cookware (112-1) at a first power level using the first inverter (110-1) operating at a first duty cycle and overlap at a fixed frequency; and
driving the second item of cookware (112-2) at a second power level using the second inverter (110-2) at a second duty cycle and overlap at the same fixed frequency,
wherein the first power level and the second power level are different power levels.

8. The method of claim 7, wherein the first inverter (110-1) comprises first and second legs (116), and the second inverter (110-2) comprises third and fourth legs (116) separate from and operating independently of the first and second legs (116).

9. The method of claim 7, wherein the first inverter (110-1) comprises a first leg (116) that acts as a master and one of a plurality of second legs (116), each second leg (116) corresponding to one of the plurality of resonant loads, and the second inverter (110-2) comprises the first leg (116) and another of the plurality of second legs (116).

10. The method of claim any one of claims 1-9, wherein the fixed frequency is the intermediate frequency between the two resonant frequencies of the first item of cookware (112-1) and the second item of cookware (112-2).

11. A current source converter (100) with a series or parallel resonant load topology, comprising:
a bridge rectifier (102) configured to convert a low frequency input voltage (104) into a full-wave rectified sinusoidal voltage;
one or more inductors (108), configured to receive the full-wave rectified sinusoidal voltage to reduce high frequency ripple;
one or more inverters (110), configured to supply high frequency alternating current (AC) to an item of cookware (112) as an inductive load, and
one or more controllers (122) configured to perform the operations of any one of method claims 1-10.

12. The current source converter (100) of claim 11, further comprising:
a plurality of inverters (110) each formed by a first leg (116) and a second leg (116), with a resonant load connected on one side to the first leg (116) and on the other side of the second legs (116),
wherein each of the first and second legs (116) is formed by a diode (118) and a switching device (120) in series.

13. The current source converter (100) of claim 11, wherein the one or more inverters (110) comprises:
a first leg (116) that acts as master;
a plurality of resonant loads; and
a plurality of second legs (116), each second leg (116) corresponding to one of the plurality of resonant loads,
wherein each of the first and second legs (116) is formed by a diode (118) and a switching device (120) in series, and each of the plurality of resonant loads is connected on one side to the first leg (116) and on the other side to a respective one of the second legs (116).

14. The current source converter (100) of one of claims 12 or 13, wherein the cookware (112) includes a first item and a second item of cookware (112-1, 112-2), and the one or more controllers (122) are further configured to:
drive the first item of cookware (112-1) at a first power level using the first leg (116) and one of the plurality of second legs (116) operating at a first duty cycle and overlap at a fixed frequency; and
drive the second item of cookware (112-2) at a second power level using the first leg (116) and another of the plurality of second legs (116) at a second duty cycle and overlap at the same fixed frequency,
wherein the first power level and the second power level are different power levels, and fixed frequency is the intermediate frequency between the resonant frequencies of the first item of cookware (112-1) and the second item of cookware (112-2).

15. The current source converter (100) of one of claims 11 to 14, wherein the one or more controllers (122) are configured to set the frequency, duty cycle, and overlap of the PWM signals to provide the desired power level based on an information mapping stored to the one or more controllers (122).
